# EUROPÄISCHE PATENTSCHRIFT

(11) **EP 2 873 150 B1**
(45) Veröffentlichungstag und Bekanntmachung des Hinweises auf die Patenterteilung: **04.04.2018**
(21) Anmeldenummer: 13735302.5
(22) Anmeldetag: 11.07.2013
(51) Int. Cl.: H02N 2/18

(54) **VERFAHREN UND VORRICHTUNG ZUR ENERGIEERZEUGUNG MIT PIEZOELEMENTEN**
METHOD AND APPARATUS FOR GENERATING ENERGY USING PIEZO ELEMENTS
PROCÉDÉ ET DISPOSITIF DE PRODUCTION D'ÉNERGIE AU MOYEN D'ÉLÉMENTS PIÉZOÉLECTRIQUES

(30) Priorität: 16.07.2012 DE 102012106376
(43) Veröffentlichungstag der Anmeldung: 20.05.2015
(73) Patentinhaber: GSI Helmholtzzentrum für Schwerionenforschung GmbH, 64291 Darmstadt (DE)
(72) Erfinder: KLEIPA, Volker, 63500 Seligenstadt (DE)
(86) Internationale Anmeldenummer: PCT/EP2013/064719
(87) Internationale Veröffentlichungsnummer: WO 2014/012845

(56) Entgegenhaltungen:
- WO-A1-00/60369
- WO-A1-2007/121265
- WO-A1-2013/026652
- DE-A1-102004 055 625
- DE-A1-102007 059 179
- US-A- 3 539 841

## Beschreibung

Die Erfindung betrifft eine Elektrizitätserzeugungsvorrichtung, die zumindest eine Magnetfelderzeugungsvorrichtung, zumindest ein Magnetfeldinteraktionsmittel sowie zumindest ein als Piezoelementeinrichtung ausgebildetes Elektrizitätserzeugungsmittel aufweist. Weiterhin betrifft die Erfindung ein Verfahren zur Erzeugung von elektrischer Energie unter Verwendung von zumindest einer Piezoelementeinrichtung.

Zur Erzeugung elektrischer Energie ist es ganz allgemein erforderlich, dass in der Regel mechanische Bewegungen in elektrische Energie umgewandelt werden müssen. Die mechanischen Bewegungen können dabei auf unterschiedlichste Weise erzeugt werden. Beispielsweise ist an Wärmekraftmaschinen, Handkurbeln oder durch erneuerbare Energieformen erzeugte mechanische Energie (zum Beispiel Windkraft, Wasserkraft und dergleichen) zu denken. Insbesondere bei eher dezentralen Anlagen sind die vorliegenden und umzuwandelnden Leistungen im Vergleich zu zentralen Kraftwerken (Kohlekraftwerke, Kernkraftwerke und dergleichen) eher klein. Dies gilt insbesondere auch für Wind- und Wasserkraftwerke (in letzterem Fall insbesondere Kleinwasserkraftwerke), wo die erzeugten mechanischen Leistungen pro Einheit eher klein sind. In zunehmendem Maße wird auch so genanntes "Energy Harvesting" vorgeschlagen, bei dem elektrische Energie aus Quellen wie Schwankungen der Umgebungstemperatur, Vibrationen oder Luftströmungen erzeugt wird. Typischerweise werden dabei vergleichsweise geringe elektrische Leistungen erzeugt, die insbesondere zum Betrieb von mobilen Geräten mit geringem elektrischem Energiebedarf dienen.

Bei einem Windpark beispielsweise treibt typischerweise jedes einzelne Windrad einen eigenen Generator an, wobei die pro Windrad erzeugten mechanischen Leistungen vergleichsweise gering sind. Dies wird durch eine entsprechend große Anzahl an Windrädern kompensiert. Da man - um beim Beispiel von Windenergie zu bleiben - den Generator möglichst in unmittelbarer Nähe zum Windrad anbringen möchte, um Übertragungsverluste möglichst gering zu halten, ist es darüber hinaus wünschenswert, den Generator möglichst klein, leicht und kompakt aufzubauen, damit dieser beispielsweise vorteilhaft in der Gondel einer Windkraftanlage untergebracht werden kann.

Darüber hinaus ist selbstverständlich stets der wirtschaftliche Aspekt zu betrachten, wobei sich dieser nicht nur auf die Kosten für den Generator selbst bezieht, sondern insbesondere auch (um erneut auf das Beispiel von Windrädern zurückzukehren) der Aufwand, der für dessen Montage erforderlich ist (Befestigung auf höheren Türmen), zu berücksichtigen ist.

Unter den vielfältigen Möglichkeiten elektrische Energie zu erzeugen, wurde im Stand der Technik bereits die Verwendung von Piezoelementen vorgeschlagen. Diese haben in der Zwischenzeit einen Stand erreicht, dass diese elektrische Leistungen erzeugen können, die durchaus zum Betrieb von elektrischen Geräten geeignet sind. Elektrische Generatoren unter Verwendung von Piezoelementen wurden beispielsweise in der Deutschen Patentschrift DE 26 12 099 B1, der Deutschen Offenlegungsschrift DE 100 54 398 A1 oder der Deutschen Anmeldeschrift DE 10 2009 033 403 A1 beschrieben. Sämtliche der dort beschriebenen elektrischen Generatoren weisen jedoch einen mechanischen Kontakt zwischen einer sich bewegenden Einrichtung und dem Piezoelement auf. Hierdurch wird der für die Stromerzeugung des Piezoelements erforderliche, zeitlich variierende mechanische Druck erzeugt. Ein Problem bei den dort vorgeschlagenen elektrischen Generatoren besteht genau in diesem zeitlich variierenden, mechanischen Kontakt. Dieser führt zu zum Teil erheblichen Reibungsverlusten, zu einem nicht unerheblichen mechanischen Verschleiß, zu zum Teil erheblichen Betriebsgeräuschen und zu einem entsprechenden mechanischen Verschleiß. Ein weiterer Nachteil bei derartigen elektrischen Generatoren besteht in deren Empfindlichkeit gegenüber auch nur geringen Längenänderungen (wie sie beispielsweise durch thermischen Verzug oder mechanische Belastungen leicht entstehen können). Da die Verformung von Piezoelementen im Betrieb typischerweise nur im Bereich von einigen wenigen 10 µm bis einigen wenigen 100 µm erfolgt, können "unabsichtliche" Längenänderungen schnell einen kritischen Bereich erreichen bzw. überschreiten. Dementsprechend ist es bei den bisherigen, kontaktbehafteten Piezo-Generatoren erforderlich, Pufferelemente vorzusehen, die eine mechanische Überbelastung verhindern. In der Summe führt dies zu erheblichen Nachteilen, die die dort vorgeschlagenen Generatoren für eine große Anzahl von Einsatzgebieten technisch und insbesondere auch wirtschaftlich ungeeignet machen.

Die Deutsche Offenlegungsschrift DE 10 2007 059 179 A1 offenbart eine Vorrichtung mit Druckwandler, wobei ein Drehkörper über magnetische oder mechanische Kopplung eine Kraft auf die Druckwandler ausübt. Die US Patentschrift 3,539,841 offenbart einen Spannungsgenerator, bei dem ein Rotor in einem Zylinder aus piezoelektrischem Material rotiert und über magnetische Induktion eine Spannung in dem piezoelektrischen Material induziert. Die Deutsche Offenlegungsschrift DE 10 2004 055 625 A1 offenbart eine Vorrichtung zur Erzeugung elektrischer Spannungsimpulse, um die Bewegung eines hin und her bewegten Schlittens mittels eines piezoelektrischen Wandlerelements zu erfassen, das aus einer ortsfest eingespannten Blattfeder und auf beiden Seiten der Blattfeder befestigten Piezoelementen besteht.

Obgleich im Stand der Technik bereits eine Vielzahl an unterschiedlichen Elektrizitätserzeugungsvorrichtungen vorgeschlagen wurden und diese auch einen respektablen Entwicklungsstand erreicht haben, besteht nach wie vor ein Bedürfnis an Verbesserungen.

Es ist daher die Aufgabe der vorliegenden Erfindung eine Elektrizitätserzeugungsvorrichtungvorzuschlagen, weiche gegenüber im Stand der Technik bekannten Elektrizitätserzeugungsvorrichtungenverbessert ist. Darüber hinaus besteht eine Aufgabe der Erfindung darin, ein Verfahren zur Erzeugung von elektrischer Energie vorzuschlagen, welches gegenüber im Stand der Technik bekannten Verfahren zur Erzeugung von elektrischer Energie verbessert ist.

Die Erfindung löst diese Aufgabe.
Im Folgenden ist der Begriff Energieerzeugungsvorrichtung im Sinne von E-lektizitätserzeugungsvorrichtung zu verstehen.

Es wird vorgeschlagen, eine Elektrizitätserzeugungsvorrichtung, die zumindest eine Magnetfelderzeugungsvorrichtung, zumindest ein Magnetfeldinteraktionsmittel sowie eine Mehrzahl an als Piezoelementeinrichtungen ausgebildeten Elektrizitätserzeugungsmitteln aufweist, derart auszuführen, dass die Magnetfelderzeugungsvorrichtung derart ausgebildet und eingerichtet ist, dass diese zumindest zeitweise ein zeitlich variables Magnetfeld erzeugt, wobei das zeitlich variable Magnetfeld ein zyklisch veränderliches Magnetfeld ist, das durch eine stampfartige Hin- und Herbewegung realisiert wird, und die Mehrzahl der Piezoelementeinrichtungen längs einer geschlossenen Umlauflinie angeordnet ist. Dabei ist der Aufbau der Energieerzeugungsvorrichtung üblicherweise derart, dass das von der Magnetfelderzeugungsvorrichtung erzeugte Magnetfeld auf das zumindest eine Magnetfeldinteraktionsmittel einwirkt bzw. mit diesen interagiert. Eine Interaktion erfolgt in aller Regel derart, dass die Interaktion überwiegend, vorzugsweise im Wesentlichen über das Magnetfeld erfolgt. Insbesondere kommt es in der Regel zu keinem, zumindest zu keinem wesentlichen mechanischen Kontakt zwischen der Magnetfelderzeugungsvorrichtung und dem zumindest einen Magnetfeldinteraktionsmittel. Der Vorteil hierin besteht in einem gegenüber von man chen im Stand der Technik bekannten Energieerzeugungsvorrichtungen zum Teil deutlich verringerten mechanischen Verschleiß, einer verringerten Reibung, einem zum Teil kostengünstigeren Aufbau (da bei mechanischen Kontaktvorrichtungen oftmals aufwändige reibungsreduzierende Vorrichtungen und/oder Härtungen vorgesehen werden müssen) und einer in der Regel erhöhten Standzeit bei üblicherweise geringeren Betriebsgeräuschen. Ein weiterer Vorteil besteht darin, dass auf Pufferelemente, wie diese derzeit in der Regel erforderlich sind, um beispielsweise eine mechanische Überbelastung durch thermischen Verzug oder mechanische Verformung zu vermeiden, in aller Regel verzichtet werden kann. Die Magnetfeldinteraktionsmittel sind üblicherweise unmittelbar mechanisch mit den Piezoelementeinrichtungen verbunden. Diese können also eine mechanische Kraft, welche schlussendlich vom zeitlich variablen Magnetfeld herrührt, auf die zumindest eine Piezoelementeinrichtung, mit der diese verbunden sind, übertragen. Hierdurch kann die mechanische Arbeit zur Verfügung gestellt werden, die die Piezoelementeinrichtungen benötigen, um elektrische Energie erzeugen zu können. In der Regel ist das zeitlich variable Magnetfeld immer dann zeitlich variierend, wenn sich die Energieerzeugungsvorrichtung in einem Betriebsmodus befindet, also elektrische Energie erzeugt wird. Die Variation des zeitlich variablen Magnetfelds kann sich dabei sowohl auf die Stärke, als auch auf den Ort des Magnetfelds beziehen (selbstverständlich auch auf beides). Das Magnetfeldinteraktionsmittel kann im Übrigen sowohl auf eine Weise aufgebaut sein, dass dieses selbst eine Art Magnetfeld erzeugt (also beispielsweise kann es sich um stromdurchflossene elektrische Leiter, elektrische Leiterschleifen, Permanentmagnete und dergleichen handeln), kann aber auch derart aufgebaut sein, dass dieses in Kombination mit einem Magnetfeld interagiert, ohne selbst ein (erhebliches) Magnetfeld zu erzeugen (beispielsweise ferromagnetische Materialien). Ein Vorteil bei der Verwendung der vorgeschlagenen Vorrichtung besteht darüber hinaus darin, dass bei der Erzeugung der elektrischen Energie meist vergleichsweise wenige Oberwellen erzeugt werden. Dementsprechend ist die EMV-Problematik deutlich einfacher zu beherrschen. Meist reichen bereits einfache Dämpfungsglieder aus (falls diese überhaupt erforderlich sind) um eine wirksame Oberwellen-Unterdrückung zu realisieren. Ein weiterer Vorteil bei zumindest einem Teil der vorgeschlagenen Energieerzeugungsvorrichtungen besteht darin, dass diese vergleichsweise unempfindlich auf zum Teil hohe Temperaturen reagieren. Herkömmliche Generatoren sind beispielsweise bestenfalls in einem Temperaturbereich bis hin zu 200°C verwendbar. Bei Rückgriff auf Piezoelementeinrichtungen können jedoch in der Regel vergleichsweise unproblematisch Temperaturen von bis zu 400°C und darüber beherrscht werden. Dies macht zur Stromabführung üblicherweise entsprechend hochtemperaturtaugliche elektrische Leiter erforderlich (wie beispielsweise Wolframdrähte, welche aufgrund der im Vergleich zu Kupfer vergleichsweise niedrigen elektrischen Leitfähigkeit in der Regel zu einem schlechteren Wirkungsgrad der Gesamtanordnung führen, aber einen Einsatz in derartigen Temperaturbereichen überhaupt erst möglich machen). Schließlich ist die vorgeschlagene Energieerzeugungsvorrichtung vom Grundsatz her auch besser für Hochvakuum-Verwendungen geeignet. Dies rührt daher, dass übliche elektrische Generatoren zur Vermeidung von elektrischen Überschlägen geeignete Isolationsmittel aufweisen müssen. Speziell im Hochvakuumbereich sind jedoch nur noch relativ wenige Isolationsmittel nutzbar, insbesondere aufgrund des Ausgasungsverhaltens von vielen elektrisch isolierenden Materialien). Da bei der vorgeschlagenen Energieerzeugungsvorrichtung üblicherweise deutlich weniger Isolationsmittel (im Vergleich zu herkömmlichen Generatoren) verwendet werden müssen, ist ein Einsatz im Hochvakuumbereich daher meist deutlich einfacher zu realisieren. Bei einer Piezoelementeinrichtung kann es sich insbesondere um ein einzelnes Piezoelement bzw. um einen "Stapel von Piezoelementen" handeln (also um eine Art "serielle Anordnung" der Piezoelemente), so dass beispielsweise die realisierbare Spannung erhöht werden kann. Mit anderen Worten kann der Aufbau derart erfolgen, dass eine Druckbelastung (gegebenenfalls auch eine Zugbelastung) an einer einzelnen Stelle der Piezoelementeinrichtung zu einer Spannungserzeugung in einer Mehrzahl von Piezoelementen der Piezoelementeinrichtung führt. In diesem Zusammenhang ist darauf hinzuweisen, dass Piezoelemente eine Art von zweidimensional-flächigem Aufbau aufweisen. Bei einer "seriellen Anordnung" werden in der Regel flächig ausgebildete Oberflächenbereiche einzelner Piezoelemente miteinander verbunden bzw. miteinander kontaktiert.

Dabei wird vorgeschlagen, dass zumindest ein Magnetfeldinteraktionsmittel mechanisch zumindest im Wesentlichen starr mit zumindest einer Piezoelementeinrichtung und/oder zumindest eine Piezoelementeinrichtung mechanisch zumindest im Wesentlichen starr mit zumindest einem korrespondierenden Teil der Energieerzeugungsvorrichtung und/oder zumindest eine Magnetfelderzeugungsvorrichtung mechanisch zumindest im Wesentlichen starr mit zumindest einem korrespondierenden Teil der Energieerzeugungsvorrichtung verbunden ist. Bei einem "korrespondierenden Teil der Energieerzeugungsvorrichtung" kann es sich beispielsweise um Teile einer Gehäuseeinrichtung, um Teile einer Halteeinrichtung für Magnetfelderzeugungsmittel, Piezoelementeinrichtungen und/oder Magnetfeldinteraktionsmittel oder dergleichen handeln. Mit anderen Worten sind keine Federeinrichtungen, Biegestangeneinrichtungen oder sonstige mechanisch reversibel verformbaren Einrichtungen vorgesehen, wie sie beispielsweise im Zusammenhang mit Energieerzeugungsvorrichtungen vorgesehen werden, die bei der Erzeugung der elektrischen Energie Resonanzeffekte nutzen. Eine "im Wesentlichen starre mechanische Verbindung" kann beispielsweise durch im Wesentlichen bündige Aneinanderlage der betreffenden Bauteile bzw. durch mechanische Verbindung der betreffenden Bauteile (rein beispielhaft seien hier Klebevorgänge oder dergleichen genannt) realisiert werden.

Es wird weiterhin vorgeschlagen, dass bei der Energieerzeugungsvorrichtung die Magnetfelderzeugungsvorrichtung derart ausgebildet und eingerichtet ist, dass diese ein zyklisch veränderliches Magnetfeld erzeugt. Während es grundsätzlich möglich ist, dass das Magnetfeld von seiner Ausrichtung her im Wesentlichen gleichbleibend ist, und lediglich dessen Stärke zeitlich variiert, hat es sich als für praktisch relevante Bauausführungen als in der Regel bevorzugt erwiesen, wenn sich (zumindest auch) die Ortsausrichtung des zeitlich variablen Magnetfelds ändert. Durch eine derartige Bewegung des Magnetfelds kann dann an unterschiedlichen Orten von beispielsweise starr befestigten Einrichtungen, wie insbesondere im Bereich von zumindest einem Magnetfeldinteraktionsmittel (oder zumindest einem Teil hiervon) "aus der Sicht des jeweiligen Orts" ein (auch) hinsichtlich seiner Stärke zeitlich variierendes Magnetfeld erzeugt werden. Dadurch ist es nicht unbedingt notwendig, die Magnetfelderzeugungsvorrichtung selbst hinsichtlich ihrer Stärke zeitlich variierend auszuführen. Dies führt in der Regel zu einfacheren Aufbauten der Magnetfelderzeugungsvorrichtungen. Insbesondere ist es auch möglich, spezielle Typen von Magnetfelderzeugungsvorrichtungen zu verwenden, die ansonsten nicht oder allenfalls nur problematisch verwendbar wären, wie beispielsweise Permanentmagneteinrichtungen. Insbesondere ist es möglich, ein bewegliches Magnetfeld durch eine (teilweise) Bewegung der zumindest einen Magnetfelderzeugungsvorrichtung und/oder durch eine Bewegung einer Halteeinrichtung, an der zumindest eine Magnetfelderzeugungsvorrichtung befestigt ist, zu realisieren. So kann insbesondere ein rotierendes Magnetfeld durch eine sich korrespondierend bewegende Magnetfelderzeugungsvorrichtung realisiert werden, wie insbesondere durch eine einfache Drehbewegung. Dies entspricht auch der "mechanischen Energieeinspeisung" herkömmlicher Generatoren, so dass die resultierende Energieerzeugungsvorrichtung beispielsweise als "drop in"-Lösung verwendet werden kann, was deren Akzeptanz signifikant erhöhen kann. Bei der vorliegenden Erfindung wird das zyklisch veränderliche Magnetfeld durch eine Hin- und Herbewegung ("stampfartige" Bewegung) realisiert. Dies ist besonders dann von Vorteil, wenn die mechanische Bewegung bereits als Hin- und Herbewegung vorliegt. Speziell können dann gesonderte Vorrichtungen zur Umsetzung einer derartigen Hin- und Herbewegung (Stampfbewegung) in eine Drehbewegung entfallen (was in der Regel auch geringere mechanische Verluste nach sich zieht).

Eine weitere bevorzugte Ausführungsform der Energieerzeugungsvorrichtung ergibt sich, wenn zumindest eine Magnetfelderzeugungsvorrichtung und/oder zumindest ein Magnetfeldinteraktionsmittel als elektrische Leiterschleifeneinrichtung, insbesondere als elektrische Spuleneinrichtung ausgebildet ist. Bei einer derartigen Ausführung ist es möglich, vergleichsweise starke magnetische Felder zu erzeugen, so dass die mögliche, insgesamt zu erzeugende elektrische Leistung bzw. die umwandelbare mechanische Leistung besonders hoch sein kann. Ein weiterer Vorteil bei einer derartigen Bauausführung kann es sein, dass die magnetischen Felder insbesondere auch vergleichsweise langsam variiert werden können. Hierdurch kann beispielsweise eine unterschiedlich starke Kopplung von Magnetfelderzeugungsvorrichtung und Magnetfeldinteraktionsmittel realisiert werden. Hierdurch kann die resultierende Energieerzeugungsvorrichtung gegebenenfalls an wechselnde Einsatzerfordernisse angepasst werden. Insbesondere kann hierdurch auch auf eine schwankende nachgefragte elektrische Last reagiert werden. Insbesondere ist es bei der Verwendung einer Mehrzahl von Magnetfelderzeugungsvorrichtungen und/oder einer Mehrzahl an Magnetfeldinteraktionsmitteln möglich, dass ein Teil derselben "ausgeschaltet" werden kann. Auch hierdurch ist es auf gegebenenfalls besonders einfache Weise möglich, die Energieerzeugungsvorrichtung an unterschiedliche Rahmenbedingungen anzupassen. Bei der Verwendung von elektrischen Leiterschleifeneinrichtungen (elektrischen Spuleneinrichtungen) ist insbesondere auch an supraleitenden Materialien zu denken.

Weiterhin wird zusätzlich oder alternativ vorgeschlagen, dass bei der Energieerzeugungsvorrichtung zumindest eine Magnetfelderzeugungsvorrichtung und/oder zumindest ein Magnetfeldinteraktionsmittel als Permanentmagneteinrichtung ausgebildet ist. Bei einem derartigen Aufbau ist es möglich, dass für den Betrieb von Magnetfelderzeugungsvorrichtung und/oder Magnetfeldinteraktionsmittel keine elektrische Energie erforderlich ist. Die resultierende Energieerzeugungsvorrichtung kann dadurch insbesondere besonders robust sein. Speziell bei Verwendung heutiger, auf speziellen Materialien beruhender Permanentmagnete können auch mit Permanentmagneten erstaunlich starke Magnetfelder erzeugt werden. Ein weiterer Vorteil bei einem derartigen Aufbau kann darin bestehen, dass insbesondere bei bewegten Teilen die zum Teil aufwändige elektrische Energiezuführung (beispielsweise durch Schleifringe oder dergleichen) entfallen kann, was den Aufbau der Energieerzeugungsvorrichtung vereinfachen helfen kann. Lediglich der Vollständigkeit halber sollte erwähnt werden, dass es selbstverständlich auch möglich ist, beispielsweise eine elektrische Spule und einen Permanentmagneten gleichzeitig zu verwenden, so dass das magnetische Feld des Permanentmagneten durch die elektrische Spule variiert, insbesondere verstärkt werden kann. Im Übrigen kann auch bei der Verwendung von Permanentmagneten eine unterschiedlich starke Kopplung, beispielsweise durch eine Variation eines Abstands, realisiert werden.

Eine weitere bevorzugte Ausführungsform der Energieerzeugungsvorrichtung kann sich ergeben, wenn eine Mehrzahl an Permanentmagneteinrichtungen vorgesehen ist, welche insbesondere gegenpolig aufeinander abfolgend angeordnet sind und/oder welche insbesondere längs einer geschlossenen Umlauflinie, bevorzugt längs einer Kreislinie angeordnet sind. Die Mehrzahl an Permanentmagneteinrichtungen kann sich dabei sowohl auf die zumindest eine Magnetfelderzeugungsvorrichtung, auf das zumindest eine Magnetfeldinteraktionsmittel oder auf beide (oder mehrere) beziehen. Durch eine wechselweise Anordnung von Permanentmagneteinrichtungen kann insbesondere bei zyklischem Durchlaufen eines magnetischen Felds (insbesondere eines magnetischen Felds, dessen Polarität sich ändert) abwechselnd eine Zug- und eine Druckkraft erzeugt werden. Dadurch kann die Effektivität der Energieerzeugungsvorrichtung gegebenenfalls deutlich erhöht werden. Insbesondere kann auch eine "Erholungsphase" zwischen zwei Druckpulsen zeitlich verkleinert werden. Die gleiche Idee ist selbstverständlich auch bei Verwendung von elektrisch erzeugten Magnetfeldern bzw. bei Verwendung von "elektrisch verstärkten Permanentmagnetfeldern" möglich.

Weiterhin wird vorgeschlagen, die Energieerzeugungsvorrichtung derart auszubilden, dass eine Mehrzahl an Piezoelementeinrichtungen vorgesehen ist, welche insbesondere längs einer geschlossenen Umlauflinie, bevorzugt längs einer Kreislinie angeordnet sind. Die Mehrzahl an Piezoelementeinrichtung kann dabei gewissermaßen "parallel zueinander" angeordnet sein und/oder verwendet werden. Die Piezoelementeinrichtungen können also nebeneinander angeordnet sein, wobei es sowohl möglich ist, dass die Piezoelementeinrichtungen zumindest teilweise unmittelbar benachbart zueinander angeordnet sind (und sich dabei gegebenenfalls berühren; hierbei können auch Isolationselemente zwischengeschaltet werden), als auch, dass die Piezoelementeinrichtungen zumindest teilweise in einem gewissen Abstand zueinander angeordnet sind (welcher beispielsweise in der Größenordnung einer "halben Größe" oder einer "ganzen Größe" einer einzelnen Piezoelementeinrichtung liegen kann). Durch eine derartige Anordnung kann einerseits elektrische Energie mit geringerer Welligkeit erzeugt werden. Andererseits kann die erzeugte elektrische Leistung bei gleichzeitig kompakter Bauform zum Teil deutlich erhöht werden. Lediglich der Vollständigkeit halber sollte darauf hingewiesen werden, dass selbstverständlich auch Piezoelementeinrichtungen aus einer Mehrzahl von Piezoelementen aufgebaut sein können, insbesondere in Form einer Art "seriellen" Anordnung, um die elektrische Leistung für eine einzelne Piezoelementeinrichtung zu erhöhen. Die Anordnung längs einer geschlossenen Umlauflinie erfolgt dabei insbesondere derart, dass das zeitlich variable Magnetfeld möglichst optimal ausgenutzt wird. Dies ist beispielsweise dann der Fall, wenn die Piezoelementeinrichtungen in einem Bereich angeordnet sind, in dem die (lokal gespürten) Magnetfeldschwankungen besonders stark sind. Eine Kreislinie bietet sich beispielsweise dann an, wenn ein Magnetfeldinteraktionsmittel rotierend bewegt wird.

Bei der Energieerzeugungsvorrichtung ist die Variation des zeitlich variablen Magnetfelds eine zyklische Veränderung des Magnetfelds und wird durch eine mechanische Bewegung, insbesondere der zumindest einen Magnetfelderzeugungsvorrichtung erzeugt. Dies kommt dem üblichen, in der Technik vorherrschenden Bedürfnis für die Verwendung von Energieerzeugungsvorrichtungen (Generatoren) in der Regel besonders entgegen. Insbesondere ist darauf hinzuweisen, dass der Großteil der derzeit im Stand der Technik verwendeten elektrischen Generatoren durch die Einkopplung einer mechanischen Drehbewegung angetrieben wird. Zum Teil liegen jedoch auch "ursprünglich" Hin- und Herbewegungen vor, wobei sich dann die Erzeugung eines zeitlich variablen Magnetfelds unter Verwendung einer Hin- und Herbewegung (Stampfbewegung) anbietet. Durch die vorgeschlagene Bauausführung ist dadurch insbesondere eine "drop in"-Lösung möglich, die die Akzeptanz der Energieerzeugungsvorrichtung deutlich erhöhen kann. Darüber hinaus kann durch den vorgeschlagenen Aufbau die Energieerzeugungsvorrichtung vergleichsweise einfach im Aufbau und/oder in der Anwendung sein. Weiterhin wird vorgeschlagen, die Energieerzeugungsvorrichtung derart aufzubauen, dass zumindest ein Magnetfeldinteraktionsmittel zumindest zwei Piezoelementeinrichtungen, insbesondere eine Mehrzahl von Piezoelementeinrichtungen zugeordnet ist und besonders bevorzugt ein einzelnes Magnetfeldinteraktionsmittel einer Gruppe von Piezoelementeinrichtungen zugeordnet ist. Die "Zuordnung" von Magnetfeldinteraktionsmittel(n) zu den Piezoelementeinrichtungen erfolgt dabei insbesondere hinsichtlich "parallel zueinander angeordneter" Piezoelementeinrichtungen. Ein derartiger Aufbau kann sich insbesondere dann als vorteilhaft erweisen, wenn das Magnetfeldinteraktionsmittel in sich beweglich/verformbar ausgeführt ist (wobei darauf hinzuweisen ist, dass aufgrund der nur geringen Längenunterschiede, wie sie bei der Verformung von Piezoelementeinrichtungen auftreten, eine vergleichsweise geringe mechanische Verformbarkeit ausreichend ist). Dies kann beispielsweise bei einer elektrischen Leiterschleife der Fall sein. Hier wirkt üblicherweise ein jeweiliger Bereich des zeitlich variablen Magnetfelds auf einem Teilbereich des betreffenden Magnetfeldinteraktionmittels ein. Der jeweilige Teilbereich des betreffenden Magnetfeldinteraktionmittels kann dann mit einer der beiden (bzw. einer Mehrzahl von) Piezoelementeinrichtungen mechanisch in Kontakt stehen. Insbesondere kann es sich hier um einen "im Wesentlichen nicht-verformbaren mechanischen Kontakt" handeln (also ohne Federeinrichtung oder sonstige reversibel mechanisch verformbare Einrichtungen, wie Sie bei Energieerzeugungsvorrichtungen, die Resonanzeffekte nutzen, üblicherweise verwendet werden). Durch einen derartigen Aufbau kann die Energieerzeugungsvorrichtung gegebenenfalls einfacher und/oder kompakter aufgebaut werden. Insbesondere kann dadurch auch der Wirkungsgrad der Energieerzeugungsvorrichtung erhöht werden und/oder die Regelbarkeit der Energieerzeugungsvorrichtung vereinfacht werden.

Weiterhin wird vorgeschlagen, dass die Energieerzeugungsvorrichtung derart ausgebildet ist, dass zwischen zumindest einem Bereich zumindest eines Magnetfeldinteraktionsmittels und zumindest einer Piezoelementeinrichtung eine zugfeste Verbindung vorgesehen ist. Hierdurch kann eine Energieerzeugung der betreffenden Piezoelementeinrichtung nicht nur "auf Druck", sondern (zusätzlich) auch "auf Zug" erfolgen. Hierdurch kann insbesondere die Kompaktheit und/oder die Effizienz der Energieerzeugungsvorrichtung zum Teil deutlich erhöht werden, was entsprechende Vorteile aufweist.

Weiterhin wird ein Verfahren zur Erzeugung von elektrischer Energie unter Verwendung einer Mehrzahl an Piezoelementeinrichtungen vorgeschlagen, die längs einer geschlossenen Umlauflinie angeordnet sind, bei dem die Mehrzahl an Piezoelementeinrichtungen durch Einwirkung eines zeitlich variierenden Magnetfelds verformt wird, wobei das Magnetfeld durch eine mechanische Bewegung zeitlich variiert wird, wobei das zeitlich variable Magnetfeld ein zyklisch veränderliches Magnetfeld ist, wobei die zyklische Veränderung durch eine stampfartige Hin- und Herbewegung realisiert wird. Bei einem derart durchgeführten Verfahren können sich die bereits vorab im Zusammenhang mit der vorgeschlagenen Energieerzeugungsvorrichtung beschriebenen Vorteile und Eigenschaften in zumindest analoger Weise ergeben. Möglich ist es dabei auch, dass das Verfahren im Lichte der vorherigen Beschreibung zumindest in analoger Weise fortgebildet wird. Auch hier ergeben sich die bereits vorab beschriebenen Vorteile und Eigenschaften zumindest in analoger Weise. Lediglich der Vollständigkeit halber wird darauf hingewiesen, dass sich Verformungen von Piezoelementeinrichtungen typischerweise im Bereich von einigen wenigen 10 µm bis hin zu einigen wenigen 100 µm bewegen. Die mechanische Energie kann beispielsweise durch Kleinkraftwerke (Wasserkraft; Windkraft; Wärmeenergie; Geothermie; thermische Solarenergie) und/oder durch so genanntes "Energy Harvesting" bereitgestellt werden.

Im Folgenden wird die Erfindung anhand von Beispielen, die für das Verständnis der Erfindung hilfreich sind, sowie vorteilhafter Ausführungsbeispiele und unter Bezugnahme auf die beigefügte Zeichnung näher erläutert. Es zeigen:
- Fig. 1:: ein erstes Beispiel für einen Piezo-Generator in einer schematischen Draufsicht;
- Fig. 2:: eine Modifikation des in Fig. 1 gezeigten Beispiels eines Piezo-Generators in einer schematischen Draufsicht;
- Fig. 3:: ein zweites Beispiel für einen Piezo-Generator in einer schematischen, perspektivischen Ansicht;
- Fig. 4:: ein drittes Beispiel für einen Piezo-Generator in einer schematischen, perspektivischen Ansicht;
- Fig. 5:: ein Ausführungsbeispiel für einen Piezo-Generator gemäß der Erfindung in einer schematischen, perspektivischen Ansicht.

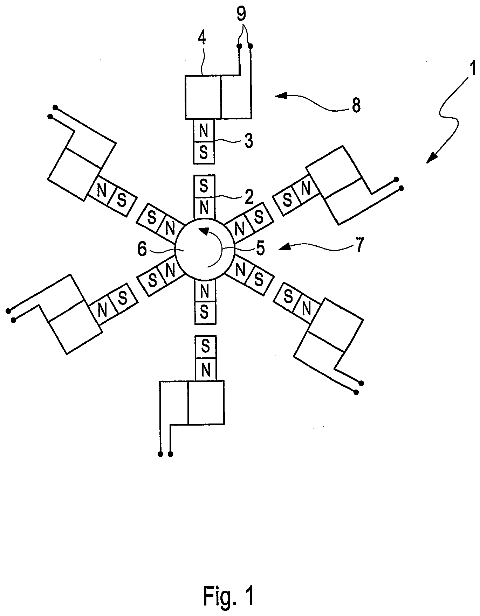

In Fig. 1 zeigt ein Beispiel für einen Piezo-Generator 1, das zum Verständnis der Erfindung hilfreich ist, in einer schematischen, perspektivischen Draufsicht dargestellt. Der vorliegend dargestellte Piezo-Generator 1 weist vorliegend sechs rotierende Permanentmagnete 2 auf (die Rotation ist durch einen Drehrichtungspfeil 5 angedeutet), die an einer Drehachse 6 befestigt sind. Die rotierenden Permanentmagnete 2 rotieren gemeinsam mit der Drehachse 6. Die Drehachse 6 wird beispielsweise durch die Flügel einer Windkraftmaschine, durch einen Verbrennungsmotor oder dergleichen angetrieben (Antriebsvorrichtung vorliegend nicht dargestellt). Im vorliegend dargestellten Beispiel ist die Ausrichtung der rotierenden Permanentmagnete 2 (also die Anordnung von Nordpol und Südpol der jeweiligen Permanentmagnete 2) jeweils gleich gewählt, nämlich vorliegend derart, dass der Südpol nach außen, von der Drehachse 6 weg weist, wohingegen der Nordpol nach innen, zur Drehachse 6 hin weist. Selbstverständlich ist auch eine umgekehrte Anordnung denkbar. Auch eine andere Anzahl von rotierenden Permanentmagneten 2 ist problemlos möglich. Die Kombination aus rotierenden Permanentmagneten 2 und der Drehachse 6 wird vorliegend in Anlehnung an klassische Generatoren im Folgenden als Läufer 7 bezeichnet.

An der radialen Außenseite des Läufers 7 ist beim in Fig. 1 gezeigten Piezo-Generator 1 der Statorbereich 8 zu erkennen (Namensgebung erfolgt ebenfalls in Anlehnung an "klassische" Generatoren). Der Stator 8 weist, vorliegend ebenfalls sechs, fest angeordnete Permanentmagneten 3 auf, die jeweils in mechanischem Kontakt zu Piezoelementen 4 angeordnet sind. Beim in Fig. 1 dargestellten Piezo-Generator 1 ist die Anordnung der festen Permanentmagneten 3 derart gewählt, dass die Südpole der Permanentmagneten 3 jeweils nach innen, zur Drehachse 6 hin, liegen (dementsprechend weisen die Nordpole der festen Permanentmagneten 3 nach außen). Jedoch ist auch eine andere Anordnung der festen Permanentmagneten 3 möglich. Insbesondere sollte die "kombinierte" Anordnung und Ausrichtung von rotierenden Permanentmagneten 2 und festen Permanentmagneten 3 derart gewählt werden, dass es bei einem Umlauf des Läufers 7 zumindest zeitweise zu Abstoßungseffekten zwischen rotierenden Permanentmagneten 2 und festen Permanentmagneten 3 kommt, da die Erzeugung elektrischer Energie in den Piezoelementen 4 besonders effektiv unter Druckbelastung vonstattengeht (eine Zugbelastung ist dagegen weniger effektiv).

Möglich ist es im Übrigen auch, dass für den Stator 8 eine abweichende Anzahl von festen Permanentmagneten 3 und/oder Piezoelementen 4 gewählt wird. Obgleich es vorteilhaft ist, dass die Anzahl von rotierenden Permanentmagneten 2 im Läufer 7 und festen Permanentmagneten 3 im Stator 8 identisch ist, kann die Anzahl durchaus auch voneinander abweichen. Sinnvoll ist es im Übrigen, dass die rotierenden Permanentmagnete 2 und/oder die festen Permanentmagnete 3 (jeweils) in einem im Wesentlichen gleichen Winkelabstand zueinander angeordnet sind. Weiterhin sollte darauf hingewiesen werden, dass in Fig. 1 aus darstellungstechnischen Gründen ein vergleichsweise großer Abstand zwischen Außenseiten der rotierenden Permanentmagneten 2 und Innenseiten der festen Permanentmagneten 3 dargestellt ist. Vorzugsweise ist dieser Abstand jedoch möglichst gering gewählt, jedoch so groß, dass es auch unter ungünstigen Bedingungen nicht zu einem Kontakt zwischen rotierenden Permanentmagneten 2 und festen Permanentmagneten 3 kommt. Ein möglichst geringer Abstand erhöht nämlich üblicherweise die Effizienz des Piezo-Generators 1.

Bei der in Fig. 1 dargestellten relativen Position von Läufer 7 und Stator 8 stoßen sich die rotierenden Permanentmagnete 2 und die festen Permanentmagnete 3 voneinander ab. Dies hat eine entsprechende Druckeinwirkung auf die Piezoelemente 4 (die mit den festen Permanentmagneten 3, wie erwähnt, in mechanischem Kontakt stehen) zur Folge. Aufgrund der Druckeinwirkung erzeugen die Piezoelemente 4 eine elektrische Leistung, welche an Kontaktklemmen 9 abgegriffen werden kann. Je nach konkretem Einsatzerfordernis können die Piezoelemente 4 durch entsprechende Verschaltung der Kontaktklemmen 9 (teilweise) parallel und/oder seriell zueinander geschaltet werden. Auch eine voneinander unabhängige Verwendung (von Teilen) der Piezoelemente 4 ist selbstverständlich möglich.

Wird der Stator 7 aus der in Fig. 1 dargestellten Position (beispielsweise) in Richtung des Drehrichtungspfeils 5 weiter bewegt, so erhöht sich die Entfernung zwischen den jeweiligen Südpolen von rotierenden Permanentmagneten 2 und festen Permanentmagneten 3, so dass der Druck auf die Piezoelemente 4 wieder nachlässt. Diese "erholen" sich und stehen für einen neuen Energieerzeugungsimpuls bereit, der sich ergibt, wenn sich der Stator 7 noch weiter dreht (vorliegend ergibt sich aufgrund der 6-zähligen Geometrie ein "gemeinsamer Stromerzeugungsimpuls" aller Piezoelemente 4 jeweils nach einer Drehbewegung von 60° des Rotors 7.

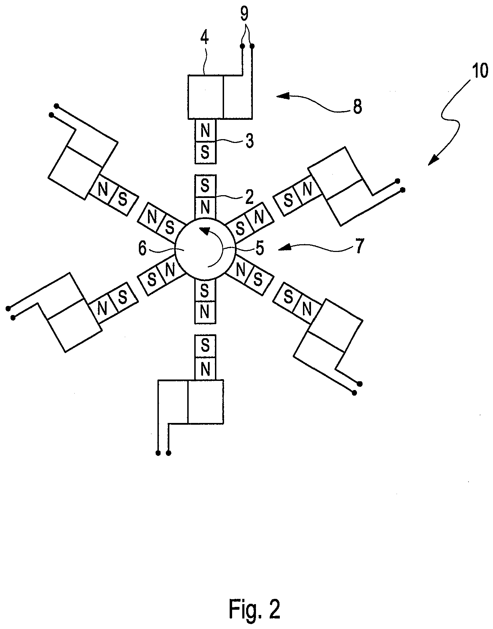

In Fig. 2 ist ein Piezo-Generator 10 dargestellt, der eine Variation des in Fig. 1 dargestellten Piezo-Generators 1 darstellt. Auch in Fig. 2 ist eine schematische Draufsicht auf den Piezo-Generator 10 dargestellt.

Wie man Fig. 2 entnehmen kann, sind die an der Drehachse 6 im Läufer 7 angeordneten rotierenden Permanentmagnete 2 jeweils antiparallel zueinander angeordnet, derart, dass aufeinander abfolgend einmal der Südpol, dann der Nordpol und anschließend wieder der Südpol (usw.) des jeweiligen rotierenden Permanentmagneten 2 nach außen zeigt. Demgegenüber sind die festen Permanentmagnete 3 des Piezo-Generators 10 analog zum in Fig. 1 dargestellten Piezo-Generator 1 angeordnet, also derart, dass sämtliche Südpole sämtlicher fester Permanentmagnete 3 nach innen, in Richtung des Läufers 7 zeigen.

Aufgrund der gewählten Anordnung von rotierenden Permanentmagneten 2 und festen Permanentmagneten 3 kommt es nach einer Umdrehung von jeweils 60° des Läufers 7 (vergleiche Drehrichtungspfeil 5) zu einer Serie von aufeinanderfolgenden Druck- und Zugbelastungen der Piezoelemente 4 (die Verbindung zwischen den festen Permanentmagneten 3 und den jeweils dazu korrespondierenden Piezoelementen 4 ist jeweils auf Zug belastbar ausgeführt). Obgleich die Piezoelemente 4 unter Zugbeanspruchung vergleichsweise wenig elektrische Energie erzeugen, kann die vorgeschlagene Ausbildung des Piezo-Generators 10 mit "antiparallel angeordneten Permanentmagneten" dennoch vorteilhaft sein, weil die "Erholungsphase" der Piezoelemente 4 durch magnetische Kräfte unterstützt werden kann. Die vorgeschlagene Ausbildung ist im Übrigen üblicherweise besonders vorteilhaft, wenn eine vergleichsweise große Anzahl an rotierenden Permanentmagneten 2 und/oder festen Permanentmagneten 3 verwendet wird.

Lediglich der Vollständigkeit halber sollte erwähnt werden, dass es selbstverständlich auch möglich ist zusätzlich oder alternativ zu den rotierenden Permanentmagneten 2, die festen Permanentmagnete 3 jeweils antiparallel zueinander anzuordnen und auszurichten.

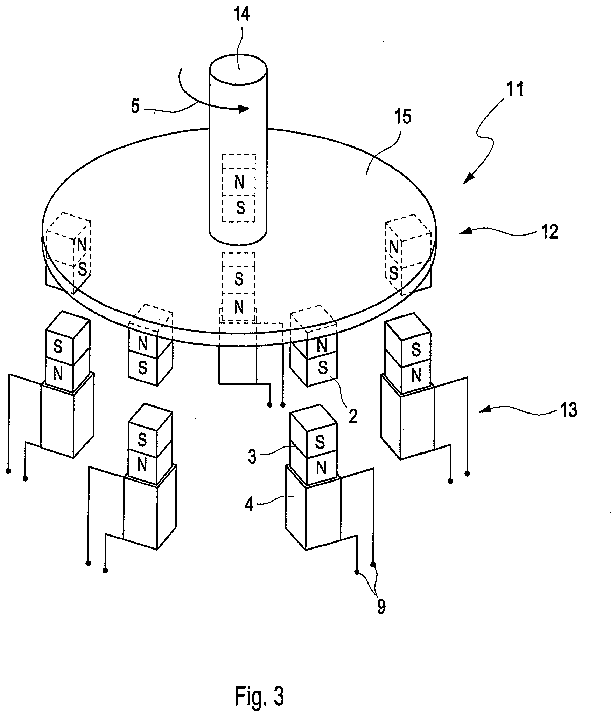

In Fig. 3 ist ein weiteres Beispiel eines Piezo-Generators 11 in einer schematischen, perspektivischen Darstellung gezeigt, das zum Verständnis der Erfindung nützlich ist. Hier sind der Läuferbereich 12 und der Statorbereich 13 axial zueinander angeordnet (in Bezug auf die Drehachse 14 gesehen).

An einem Ende der Drehachse 14 ist ein rotierender Teller 15 befestigt. Auf der zur Drehachse 14 gegenüberliegenden Ebene des rotierenden Tellers 15 ist eine Mehrzahl von rotierenden Permanentmagneten 2 befestigt. In der vorliegend gewählten perspektivischen Ansicht sind insgesamt fünf rotierende Permanentmagnete 2 zu erkennen. Der rotierenden Teller 15 bildet gemeinsam mit der Drehachse 14 den Läuferbereich 12.

Der zum Läufer 12 benachbart angeordnete Statorbereich 13 weist eine Mehrzahl von festen Permanentmagneten 3 auf (vorliegend korrespondierend zur Anzahl der rotierenden Permanentmagneten 2 ebenfalls fünf feste Permanentmagnete 3), die jeweils (vorzugsweise auf Zug belastbar) mechanisch mit jeweils einem Piezoelement 4 verbunden sind. Auch vorliegend kann die von den Piezoelementen 4 insbesondere unter Druckbelastung erzeugte elektrische Energie über Kontaktklemmen 9 abgegriffen werden (die Verschaltung der Kontaktklemmen kann in Abhängigkeit von den konkreten Bedürfnissen gewählt werden).

Beim in Fig. 3 dargestellten Beispiel eines Piezo-Generators 11 sind die Südpole der rotierenden Permanentmagneten 2 und der festen Permanentmagneten 3 jeweils einander zugewandt angeordnet. Auch hier sind andere Anordnungen denkbar, wie insbesondere eine "vollständig umgedrehte" Anordnung und/oder eine (teilweise) antiparallele Anordnung der Permanentmagnete 2, 3. Natürlich ist auch eine abweichende Anzahl von rotierenden Permanentmagneten 2 und/oder festen Permanentmagneten 3 und/oder Piezoelementen 4 denkbar. Insbesondere bei einer (teilweisen) antiparallelen Anordnung ist eine geradzahlige Anzahl von rotierenden Permanentmagneten 2 bzw. festen Permanentmagneten 3 in der Regel sinnvoll.

Die Funktionsweise des in Fig. 3 dargestellten Piezo-Generators 11 ähnelt den bereits beschriebenen Piezo-Generatoren 1, 10. Bei einer Drehung des Läufers 12 (beispielsweise) in Drehrichtung (durch Drehrichtungspfeil 5 angedeutet) kommt es regelmäßig zu einer starken Abstoßung von rotierenden Permanentmagneten 2 und festen Permanentmagneten 3, wenn diese einander gegenüberstehen Diese Abstoßung bewirkt einen entsprechenden Druck auf die Piezoelemente 4, die dadurch elektrische Energie erzeugen, die an den Kontaktklemmen 9 abgegriffen werden kann.

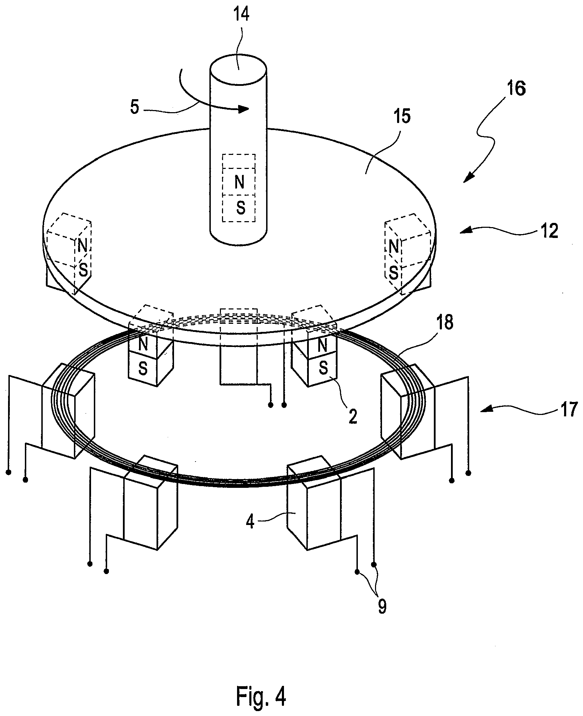

In Fig. 4 ist noch ein weiteres Beispiel für einen Piezo-Generator 16 dargestellt. Der Läufer 12 ist vorliegend im Wesentlichen identisch zum Läufer 12 des in Fig. 3 dargestellten Piezo-Generators 11 ausgebildet. Der Stator 17 ist jedoch modifiziert.

In Fig. 4 ist erneut eine Anzahl von Piezoelementen 4 zu erkennen, die elektrische Energie liefern, die über Kontaktklemmen 9 abgegriffen werden kann. Die Druckbeaufschlagung der Piezoelemente erfolgt jedoch vorliegend nicht mittels Permanentmagneten (die bislang als Magnetfeldinteraktionsmittel dienten), sondern durch eine einzelne, liegend angeordnete elektrische Spule 18. Vorliegend ist die elektrische Spule 18 als supraleitende Spule ausgebildet und weist eine gewisse innere Flexibilität auf. Die entsprechenden Teilbereiche der elektrischen Spule 18 sind (vorzugsweise auf Zug belastbar) mit den korrespondierenden Endbereichen der Piezoelemente verbunden. Bei einem Stromdurchfluss durch die elektrische Spule 18 erzeugen die einzelnen Leiter jeweils ein magnetisches Feld (Magnetfeld eines stromdurchflossenen Leiters), das mit dem (zeitlich variierenden) Magnetfeld, welches durch die rotierenden Permanentmagnete 2, die am rotierenden Teller 15 angeordnet sind erzeugt wird, interagiert. Dies bewirkt eine zyklische Druckbelastung der Piezoelemente 4, was mit einer entsprechenden Stromerzeugung einhergeht.

Lediglich der Vollständigkeit halber sollte darauf hingewiesen werden, dass es selbstverständlich auch möglich ist, dass einzelne oder alle Permanentmagnete 2, 3 (also entweder rotierende Permanentmagnete 2 und/oder feste Permanentmagnete 3, insbesondere auch gruppenweise) durch individuelle elektrische Spulen, insbesondere supraleitende Spulen, ersetzt werden können.

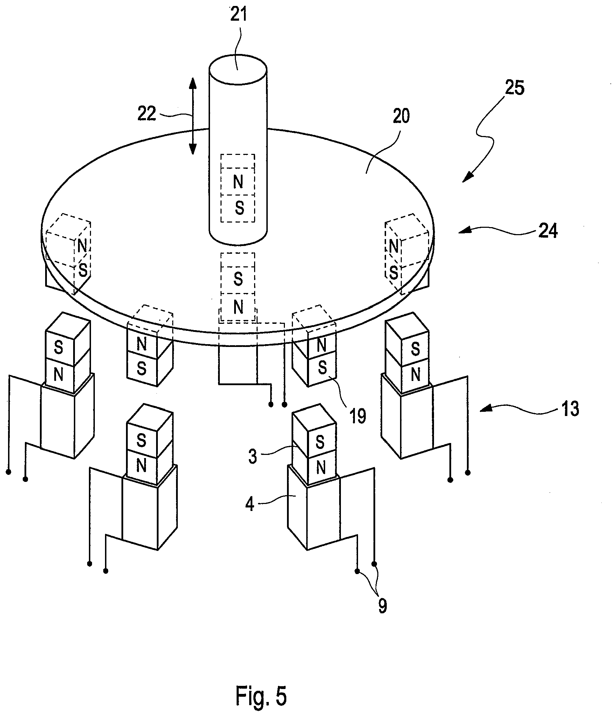

In Fig. 5 ist ein Ausführungsbeispiel eines Piezo-Generators 25 gemäß der vorliegenden Erfindung in einer schematischen, perspektivischen Ansicht gezeigt. Der vorliegend dargestellte Piezo-Generator 25 entspricht von seinem Aufbau her weitgehend dem in Fig. 3 dargestellten Piezo-Generator 11. Vorliegend wird der Piezo-Generator 25 jedoch nicht durch eine Drehbewegung, sondern durch eine "Stampfbewegung" (also eine Hin- und Herbewegung, welche durch den Doppelpfeil 22 in Fig. 5 angedeutet ist) angetrieben. Dementsprechend handelt es sich um eine Antriebsachse 21, welche die Stampfbewegung 22 auf den Halteteller 20 überträgt. Am Halteteller 20 sind - analog zum in Fig. 3 dargestellten Ausführungsbeispiel eines Piezo-Generators 11 - vorliegend fünf bewegliche Permanentmagnete 19 angeordnet (wobei natürlich auch eine andere Anzahl von beweglichen Permanentmagneten 19 und/oder festen Permanentmagneten 3 möglich ist). Antriebsachse 21, bewegliche Permanentmagnete 19 und Halteteller 20 bilden zusammen den beweglichen Bereich 24 aus, der sich relativ zum Fixbereich 23 (bestehend aus festen Permanentmagneten 3 und Piezoelementen 4) bewegt.

Der durch die Stampfbewegung 22 bewirkte, zeitlich variierende Abstand zwischen den beweglichen Permanentmagneten 19 und den festen Permanentmagneten 3 bewirkt eine unterschiedlich starke Kraft auf die Piezoelemente 4, welche wiederum in der Erzeugung einer dazu korrespondierenden elektrischen Energie resultiert (welche über Kontaktklemmen 9 abgegriffen werden kann).

Der in Fig. 5 dargestellte Piezo-Generator 25 ist insbesondere dann vorteilhaft, wenn als mechanische "Ausgangsbewegung" bereits eine Hin- und Herbewegung vorliegt.

Das in Bezug auf Fig. 5 dargestellte Prinzip kann selbstverständlich auch auf andere Bauausführungen von Piezo-Generatoren übertragen werden, wie insbesondere auch auf die in Fig. 4 dargestellte Bauausführung eines Piezo-Generators 12.

### Bezugszeichenliste:

| | | | |
|---|---|---|---|
| 1. | Piezo-Generator | 13. | Stator |
| 2. | Rotierende Permanentmagnete | 14. | Drehachse |
| | | 15. | Rotierender Teller |
| 3. | Feste Permanentmagnete | 16. | Piezo-Generator |
| 4. | Piezoelement | 17. | Stator |
| 5. | Drehrichtungspfeil | 18. | Elektrische Spule |
| 6. | Drehachse | 19. | bewegliche Permanentmagnete |
| 7. | Läufer | | |
| 8. | Stator | 20. | Halteteller |
| 9. | Kontaktklemmen | 21. | Antriebsachse |
| 10. | Piezo-Generator (Variation von 1) | 22. | Hin- und Herbewegung |
| | | 23. | Fixbereich |
| 11. | Piezo-Generator | 24. | beweglicher Bereich |
| 12. | Läufer | 25. | Piezo-Generator |

## Patentansprüche

1. Elektrizitätserzeugungsvorrichtung (1, 10, 11, 12), aufweisend zumindest eine Magnetfelderzeugungsvorrichtung (2), zumindest ein Magnetfeldinteraktionsmittel (3, 18) sowie eine Mehrzahl an als Piezoelementeinrichtungen (4) ausgebildeten Elektrizitätserzeugungsmitteln, wobei die Magnetfelderzeugungsvorrichtung (2) derart ausgebildet und eingerichtet ist, dass diese zumindest zeitweise ein zeitlich variables Magnetfeld erzeugt, wobei das zeitlich variable Magnetfeld ein zyklisch veränderliches Magnetfeld ist, wobei die zyklische Veränderung durch eine stampfartige Hin- und Herbewegung der Magnetfelderzeugungseinrichtung realisiert wird, **dadurch gekennzeichnet, dass** die Mehrzahl der Piezoelementeinrichtungen längs einer geschlossenen Umlauflinie angeordnet ist.

2. Elektrizitätserzeugungsvorrichtung (1, 10, 11, 12) nach Anspruch 1 oder 2, **dadurch gekennzeichnet, dass** zumindest eine Magnetfelderzeugungsvorrichtung (2) und/oder zumindest ein Magnetfeldinteraktionsmittel (3, 18) als elektrische Leiterschleifeneinrichtung (18), insbesondere als elektrische Spuleneinrichtung (18) ausgebildet ist.

3. Elektrizitätserzeugungsvorrichtung (1, 10, 11, 12) nach einem der vorangehenden Ansprüche, **dadurch gekennzeichnet, dass** zumindest eine Magnetfelderzeugungsvorrichtung (2) und/oder zumindest ein Magnetfeldinteraktionsmittel (3, 18) als Permanentmagneteinrichtung (2, 3) ausgebildet ist.

4. Elektrizitätserzeugungsvorrichtung (1, 10, 11, 12) nach einem der vorangehenden Ansprüche, insbesondere nach Anspruch 3, **dadurch gekennzeichnet, dass** eine Mehrzahl an Permanentmagneteinrichtungen (2, 3) vorgesehen ist, welche insbesondere gegenpolig aufeinander abfolgend angeordnet sind und/oder welche insbesondere längs einer geschlossenen Umlauflinie, bevorzugt längs einer Kreislinie angeordnet sind.

5. Elektrizitätserzeugungsvorrichtung (1, 10, 11, 12) nach einem der vorangehenden Ansprüche, **dadurch gekennzeichnet, dass** die Mehrzahl an Piezoelementeinrichtungen (4) längs einer Kreislinie angeordnet sind.

6. Elektrizitätserzeugungsvorrichtung (1, 10, 11, 12) nach einem der vorangehenden Ansprüche, **dadurch gekennzeichnet, dass** die Variation des zeitlich variablen Magnetfelds, insbesondere die Bewegung, bevorzugt die zyklische Veränderung des Magnetfelds durch eine mechanische Bewegung (5) insbesondere der zumindest einen Magnetfelderzeugungsvorrichtung (2) erzeugt wird.

7. Elektrizitätserzeugungsvorrichtung (1, 10, 11, 12) nach einem der vorangehenden Ansprüche, **dadurch gekennzeichnet, dass** zumindest ein Magnetfeldinteraktionsmittel (3, 18) zumindest zwei Piezoelementeinrichtungen (4), insbesondere einer Mehrzahl von Piezoelementeinrichtungen (4) zugeordnet ist und besonders bevorzugt ein einzelnes Magnetfeldinteraktionsmittel (3, 18) einer Gruppe von Piezoelementeinrichtungen (4) zugeordnet ist.

8. Elektrizitätserzeugungsvorrichtung (1, 10, 11, 12) nach einem der vorangehenden Ansprüche, **gekennzeichnet durch** eine zugfeste Verbindung zwischen zumindest einem Bereich zumindest eines Magnetfeldinteraktionsmittel (3, 18) und zumindest einer Piezoelementeinrichtung (4).

9. Verfahren zur Erzeugung von elektrischer Energie unter Verwendung einer Mehrzahl an Piezoelementeinrichtungen (4), wobei die Mehrzahl an Piezoelementeinrichtungen (4) durch Einwirkung eines zeitlich variierenden Magnetfelds und unter Vermittlung einer Mehrzahl von Magnetfeldinteraktionsmitteln (3, 18) verformt wird, wobei das Magnetfeld durch eine mechanische Bewegung (5) zeitlich variiert wird, **dadurch gekennzeichnet, dass** das zeitlich variable Magnetfeld ein zyklisch veränderliches Magnetfeld ist, wobei die zyklische Veränderung durch eine stampfartige Hin- und Herbewegung einer Magnetfelderzeugungsvorrichtung realisiert wird, und **dadurch gekennzeichnet, dass** die Mehrzahl an Piezoelementeinrichtungen längs einer geschlossenen Umlauflinie angeordnet sind.

## Claims

1. Electricity generating device (1, 10, 11, 12), having at least one magnetic field generating device (2), at least one magnetic field interaction means (3, 18) and a plurality of electricity generating means designed as piezo element devices (4), wherein said magnetic field generating device (2) is designed and configured such that it generates at least at times a time-variable magnetic field, wherein said time-variable magnetic field is a cyclically changing magnetic field, where the cyclic change is achieved by a pitching back-and-forth movement of said magnetic field generating device, **characterized in that** said plurality of piezo element devices is arranged along a closed circumferential line.

2. Electricity generating device (1, 10, 11, 12) according to claim 1 or 2, **characterized in that** at least one magnetic field generating device (2) and/or at least one magnetic field interaction means (3, 18) is designed as an electric conductor loop unit (18), in particular as an electric coil unit (18).

3. Electricity generating device (1, 10, 11, 12) according to one of the preceding claims, **characterized in that** at least one magnetic field generating device (2) and/or at least one magnetic field interaction means (3, 18) is designed as a permanent magnet device (2, 3).

4. Electricity generating device (1, 10, 11, 12) according to one of the preceding claims, in particular according to claim 3, **characterized in that** a plurality of permanent magnet devices (2, 3) is provided that in particular are arranged alternatingly with one another with opposing poles and/or which in particular are arranged along a closed circumferential line, preferably along a circular line.

5. Electricity generating device (1, 10, 11, 12) according to one of the preceding claims, **characterized in that** the plurality of piezo element devices (4) is arranged along a circular line.

6. Electricity generating device (1, 10, 11, 12) according to one of the preceding claims, **characterized in that** the variation of the time-variable magnetic field, in particular the movement, and preferably the cyclic change of the magnetic field, is generated by a mechanical movement (5) in particular of the at least one magnetic field generating device (2).

7. Electricity generating device (1, 10, 11, 12) according to one of the preceding claims, **characterized in that** at least one magnetic field interaction means (3, 18) is assigned to at least two piezo element devices (4), in particular to a plurality of piezo element devices (4), and particularly preferably a single magnetic field interaction means (3, 18) is assigned to a group of piezo element devices (4).

8. Electricity generating device (1, 10, 11, 12) according to one of the preceding claims, **characterized by** a strain-resistant connection between at least one area of at least one magnetic field interaction means (3, 18) and of at least one piezo element device (4).

9. Method for generating electrical energy using a plurality of piezo element devices (4), wherein said plurality of piezo element devices (4) is deformed by the effect of a time-varying magnetic field and through the intermediation of a plurality of magnetic field interaction means (3, 18), wherein said magnetic field is time-varied by a mechanical movement (5), **characterized in that** the time-variable magnetic field is a cyclically changing magnetic field, where the cyclic change is achieved by a pitching back-and-forth movement of a magnetic field generating device, and **characterized in that** the plurality of piezo element devices is arranged along a closed circumferential line.

## Revendications

1. Dispositif de production d'électricité (1, 10, 11, 12) présentant au moins un dispositif de production de champ magnétique (2), au moins un moyen d'interaction avec le champ magnétique (3, 18) ainsi qu'une multitude de moyens de production d'électricité conçus sous forme de dispositifs à éléments piézoélectriques (4), sachant que le dispositif de production de champ magnétique (2) est conçu et configuré de sorte à produire au moins temporairement un champ magnétique variable dans le temps, sachant que le champ magnétique variable dans le temps est un champ magnétique variable cycliquement, sachant que le changement cyclique est réalisé par un mouvement de va-et-vient, semblable au tangage, du dispositif de production de champ magnétique, **caractérisé en ce que** la multitude des dispositifs à éléments piézoélectriques est disposée le long d'une ligne de rotation fermée.

2. Dispositif de production d'électricité (1, 10, 11, 12) selon la revendication 1 ou 2, **caractérisé en ce qu'**au moins un dispositif de production de champ magnétique (2) et/ou au moins un moyen d'interaction avec le champ magnétique (3, 18) est conçu sous forme de dispositif à boucle conductrice (18), notamment de dispositif à bobine électrique (18).

3. Dispositif de production d'électricité (1, 10, 11, 12) selon une des revendications précédentes, **caractérisé en ce qu'**au moins un dispositif de production de champ magnétique (2) et/ou au moins un moyen d'interaction avec le champ magnétique (3, 18) est conçu sous forme de dispositif à aimant permanent (2, 3).

4. Dispositif de production d'électricité (1, 10, 11, 12) selon une des revendications précédentes, notamment selon la revendication 3, **caractérisé en ce qu'**est prévue une multitude de dispositifs à aimant permanent (2, 3) qui sont disposés à la suite les uns des autres notamment avec pôles inversés et/ou qui sont disposés notamment le long d'une ligne de rotation fermée, de préférence le long d'une ligne circulaire.

5. Dispositif de production d'électricité (1, 10, 11, 12) selon une des revendications précédentes, caractérisé en ce la multitude de dispositifs à éléments piézoélectriques (4) est disposée le long d'une ligne circulaire.

6. Dispositif de production d'électricité (1, 10, 11, 12) selon une des revendications précédentes, **caractérisé en ce que** la variation du champ magnétique variable dans le temps, notamment le mouvement, de préférence le changement cyclique du champ magnétique est produit par un mouvement mécanique (5), notamment dudit au moins un dispositif de production de champ magnétique (2).

7. Dispositif de production d'électricité (1, 10, 11, 12) selon une des revendications précédentes, **caractérisé en ce qu'**au moins un moyen d'interaction avec le champ magnétique (3, 18) est attribué à au moins deux dispositifs à éléments piézoélectriques (4), notamment à une multitude de dispositifs à éléments piézoélectriques (4) et que notamment de préférence un seul moyen d'interaction avec le champ magnétique (3, 18) est attribué à un groupe de dispositifs à éléments piézoélectriques (4).

8. Dispositif de production d'électricité (1, 10, 11, 12) selon une des revendications précédentes, **caractérisé par** une liaison résistante à la traction entre au moins une partie d'au moins un moyen d'interaction avec le champ magnétique (3, 18) et au moins un dispositif à élément piézoélectrique (4).

9. Procédé de production d'énergie électrique utilisant une multitude de dispositifs à éléments piézoélectriques (4), sachant que la multitude de dispositifs à éléments piézoélectriques (4) est déformée sous l'effet d'un champ magnétique variant dans le temps et par l'intermédiaire d'une multitude de moyens d'interaction avec le champ magnétique (3, 18), sachant qu'un mouvement mécanique (5) fait varier le champ magnétique dans le temps, **caractérisé en ce que** le champ magnétique variable dans le temps est un champ magnétique variable cycliquement, sachant que le changement cyclique est réalisé par un mouvement de va-et-vient semblable au tangage, et **caractérisé en ce que** la multitude de dispositifs à éléments piézoélectriques est disposée le long d'une ligne de rotation fermée.
